# EUROPEAN PATENT APPLICATION

(11) **EP 1 657 931 A2**
(43) Date of publication of application: **17.05.2006**
(21) Application number: 05254346.9
(22) Date of filing: 12.07.2005
(51) Int. Cl.: H04N 7/24, H04N 7/167, H04N 5/00

(54) **multimedia data transacting system and method**

(30) Priority: 14.07.2004 KR 2004054814
(71) Applicant: SAMSUNG ELECTRONICS CO., LTD., Suwon-si, Gyeonggi-do (KR)
(72) Inventor: Kang, Yong-jin, Yeongtong-gu, Suwon-si Gyeonggi-do (KR)
(74) Representative: Davies, Robert Ean

(57) **Abstract**

A multimedia data transacting method, and an apparatus and system to perform the method, the method including extracting scrambled multimedia data from a broadcast signal received from a broadcasting station server, requesting (S240) and receiving (S250) a descramble key to descramble (S260) multimedia data, contained in the broadcast signal, that a user selects to purchase, and descrambling the selected multimedia data using the descramble key.

## Description

The present invention relates in general to a multimedia data transacting system and method, and, more particularly, but not exclusively, to a multimedia data transacting system and method to receive scrambled multimedia data from a broadcasting station server, and obtains a descramble key to descramble the multimedia data selected by a user through a common carrier to purchase the multimedia data.

As the digital age progresses, the demand for various digital multimedia data (hereinafter, referred to as a multimedia data) including motion picture files such as, for example, MPEG (Motion Picture Experts Group) or AVI (Audio Video Interleaved), and audio files such as, for example, MP3 (MPEG audio layer-3) or OGG (Ogg Vobis), has rapidly increased. Particularly, as wired and wireless network communication develops, multimedia data transactions are increasingly performed on-line, rather than off-line.

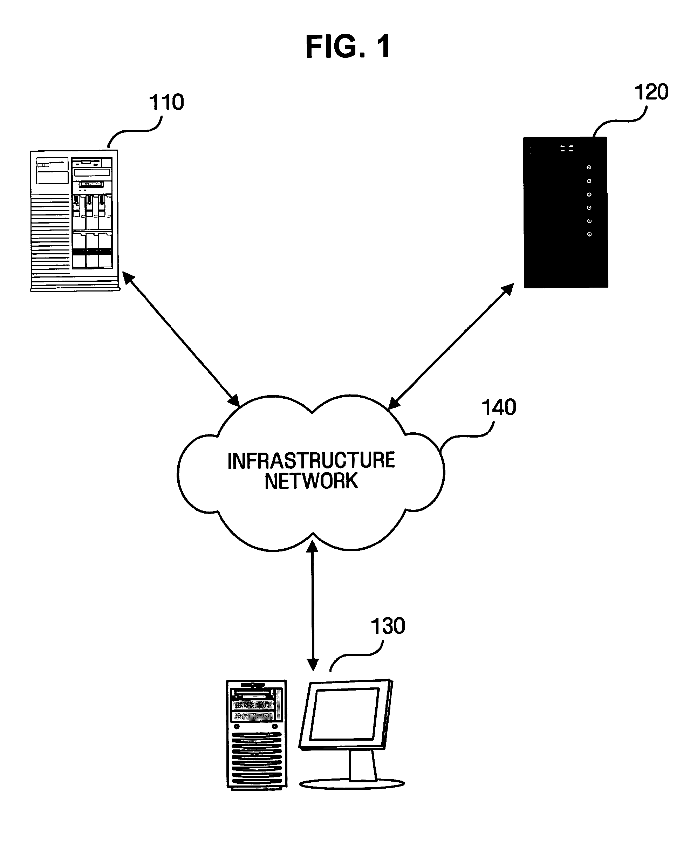

Fig. 1 illustrates a conventional multimedia data transacting system. The system includes a selling server 110 for selling various multimedia data, a communication device 130, such as a personal computer, which is connected to the selling server through a communication network such as the Internet, and which allows a user to download desired multimedia data, and a fee paying server 120 for paying the fee for the desired multimedia data.

The user who wants to purchase the multimedia data connects the communication device 130 to the selling server 110 through an infrastructure network 140 such as the Internet. Then, the user retrieves the desired multimedia data among various multimedia data which is registered in the selling server 110.

If the user requests the purchase of the multimedia data, the selling server 110 provides a fee paying means to the user to pay for the multimedia data. The fee paying means may be an account transfer, credit card, or communication fee.

If the user selects the fee paying means, the selling server 110 verifies the fee payment in connection with the fee paying server 120 by the means selected by the user, such as the server banking facilities or a common carrier.

Before paying the fee, the fee paying server 120 requests the user to input various types of identification information (for example, a credit card number, a user name, and a password) to verify the identity of the user. If the user inputs the identification information, the fee paying server 120 verifies the identification information and proceeds to pay the fee. After paying the fee, the fee paying server 120 notifies the user as to whether the fee payment was successful.

If the fee payment was successful, the selling server 110 transmits the multimedia data selected by the user to the communication device 130. Upon receiving this transmission at the communication device 130, the user can download the multimedia data.

In some cases, the selling server 110 or the fee payment server 120 may transmit an authentication number to another communication device, such as a portable phone, of the user using SMS (Short Message Service) so as to accurately verify the identification of the user. At this time, the user can input the received authentication number into the communication device 130 to verify that he/she is the verified user.

This conventional technique is troublesome in that, as described above, the user must connect the communication device 130 to the selling server 110 through the infrastructure network 140 so as to purchase the multimedia data, and must input various types of the identification information in order to pay the fee for downloading the multimedia data. Also, it takes a long time to download the multimedia data.

Additionally, a network connection fee must be paid, since the communication device 130 is connected to the infrastructure network 140 through a modem.

An aim of embodiments of the present invention is to shorten the time consumed when purchasing a multimedia data, and to simplify a purchasing procedure.
Additional aspects and/or advantages of the invention will be set forth in part in the description which follows and, in part, will be apparent from the description, or may be learned by practice of the invention.

According to a first aspect, the present invention provides a broadcast receiving apparatus, including a broadcast signal processing unit to receive a broadcast signal transmitted from a broadcasting station server, and extract scrambled multimedia data and metadata contained in the received broadcast signal; a storage unit to store the extracted multimedia data and metadata; a data transmitter/receiver to transmit a message requesting a descramble key to descramble multimedia data a user wants to purchase, and to receive the descramble key; and a control unit to descramble the multimedia data the user wants to purchase using the received descramble key.

According to a second aspect, the present invention also provides a multimedia data transacting method, the method including receiving a broadcast signal transmitted from a broadcasting station server and extracting scrambled multimedia data and metadata contained in the received broadcast signal; requesting a descramble key to descramble the extracted multimedia data that a user wants to purchase; receiving the descramble key in response to the request; and descrambling the multimedia data the user wants to purchase using the received descramble key.

According to a third aspect, the present invention provides a broadcast receiving apparatus, including a broadcast signal processing unit to receive a broadcast signal transmitted from a broadcasting station server, and extract scrambled multimedia data contained in the received broadcast signal; and a data transmitter/receiver to request and receive a descramble key to descramble multimedia data that a user selects to purchase.

According to a fourth aspect, The present invention also provides a multimedia data transacting method, the method including extracting scrambled multimedia data from a broadcast signal received from a broadcasting station server; requesting and receiving a descramble key to descramble multimedia data, contained in the broadcast signal, that a user selects to purchase; and descrambling the selected multimedia data using the descramble key.

For a better understanding of the invention, and to show how embodiments of the same may be carried into effect, reference will now be made, by way of example, to the accompanying diagrammatic drawings in which:
Fig. 1 illustrates a conventional multimedia data transacting system;
Fig. 2 illustrates a multimedia data transacting system according to an embodiment of the present invention;
Fig. 3 illustrates a block diagram of a broadcast receiving apparatus according to an embodiment of the present invention;
Fig. 4 is a flowchart illustrating a multimedia data transacting procedure according to an embodiment of the present invention; and
Fig. 5 is a flowchart illustrating a multimedia data purchasing procedure of the broadcast receiving apparatus according to an embodiment of the present invention.

Reference will now be made in detail to embodiments of the present invention, examples of which are illustrated in the accompanying drawings, wherein like reference numerals refer to the like elements throughout. The embodiments are described below to explain the present invention by referring to the figures. The invention may, however, be embodied in many different forms, and should not be construed as being limited to the embodiments set forth herein.

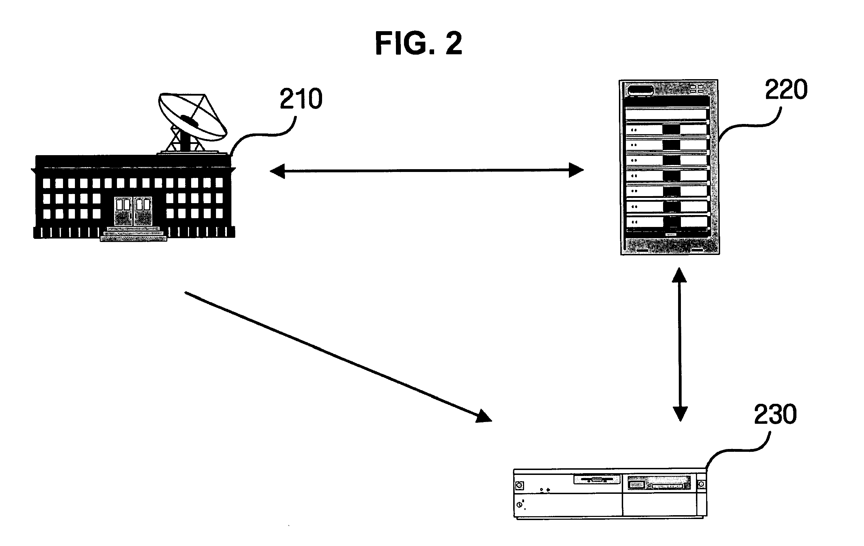

Fig. 2 illustrates a multimedia data transacting system according to an embodiment of the present invention.

The system includes a broadcasting station server 210 to periodically or non-periodically transmit scrambled multimedia data, a broadcast receiving apparatus 230 to receive a broadcast signal transmitted from the broadcasting station server 210 and provide the broadcast signal to a user, and a communication server 220 to provide a descramble key to the user to descramble specific multimedia data.

The broadcasting station server 210 modulates various multimedia data formats suitable for each transmitting medium, such as over-the-air broadcast, satellite, or cable broadcast, and transmits the modulated multimedia data. At this time, the transmitted multimedia data is scrambled by a specific scramble key. With the multimedia data, the broadcasting station server 210 can transmit various types of information regarding the multimedia data (hereinafter, referred to as metadata), such as the type of multimedia data (for example, an MP3 or an AVI file), the content of the multimedia data (for example, the title of a song or the name of a singer when the multimedia data is an MP3 music file), the price of the multimedia data, and identification information to identify the multimedia data (for example, a serial number).

The multimedia data transmitted from the broadcasting station server 210 can be periodically or non-periodically updated. For example, if new music becomes available, the broadcasting station server 210 may group the MP3 files and transmit them for each predetermined period, or transmit them whenever the number of the grouped MP3 files is more than a predetermined number. Accordingly, the user can receive new multimedia data such as movies, music, or music videos.

The multimedia data and metadata may be received from a separate multimedia data seller (not shown).

In addition, the broadcasting station server 210 can also transmit a broadcast program that has been broadcast to be received by a television, and the multimedia data and the metadata can be selectively transmitted together with the broadcast program. For example, the multimedia data and the metadata can be transmitted through a separate broadcasting channel in a time zone where the broadcast program is broadcasted, and it can also be transmitted through an existing broadcasting channel in another time zone where the broadcast program has not been transmitted.

The broadcast receiving apparatus 230 can receive the broadcast signal transmitted from the broadcasting station server 210, and includes, for example, a set-top box or a digital television. The broadcast receiving apparatus 230 extracts and stores the multimedia data and the metadata from the broadcast signal.

The broadcast receiving apparatus 230 checks the metadata transmitted together with the multimedia data so that previously stored multimedia data is not stored again.

The user can check the metadata stored in the broadcast receiving apparatus 230 to select the multimedia data that he/she wants to purchase.

If the user selects multimedia data to purchase, the broadcast receiving apparatus 230 requests a descramble key to descramble the corresponding multimedia data. The broadcast receiving apparatus 230 can insert identification information (hereinafter, referred to as multimedia data ID) to identify the multimedia data selected by the user in the descramble key request message. This multimedia data ID may be contained in the metadata transmitted from the broadcasting station server 210.

The request for and the reception of the descramble key can be performed through a wired communication system such as a general telephone, or through a wireless communication system such as a mobile phone. The broadcast receiving apparatus 230 may include a data transmitter/receiver (not shown) which can communicate in a wired or wireless manner using technologies such as Wi-Fi, GPRS (General Packet Radio Service), DSL (Digital Subscriber Line), or a telephone modem. This data transmitter/receiver can function as a communication modem that can both packetize data for transmission and receive packetized data. Accordingly, the broadcast receiving apparatus 230 may have a unique communication number allocated from a common carrier that operates the communication server 220, such as a mobile phone number or a telephone number.

If the broadcast receiving apparatus 230 requests the descramble key, the communication server 220, which provides a wired or wireless communication service, transmits the requested descramble key to the broadcast receiving apparatus 230. This descramble key may be previously provided by the multimedia data provider or the broadcasting station server 210. Also, the communication server 220 can receive the multimedia data ID of the multimedia data which can be descrambled with the descramble key. Accordingly, if the communication server 220 receives the descramble key request message from the broadcast receiving apparatus 230, it can retrieve the descramble key requested by the communication server220 using the multimedia data ID.

The communication server 220, which transmits the descramble key, may further add the multimedia data purchasing fee when imposing the communication fee to the user of the broadcast receiving apparatus 230. Also, the communication server 220 may notify the broadcasting station server 210 of the multimedia data purchase so that the broadcast operator can calculate the fee.

In another embodiment of the present invention, the communication server 220 can encrypt and transmit the requested descramble key. The variable used to encrypt the descramble key may contain the multimedia data ID contained in the descramble key request message transmitted from the broadcast receiving apparatus 230. Accordingly, the multimedia data ID must be known in order to decrypt the encrypted descramble key. Even if another broadcast receiving apparatus intercepts the encrypted descramble key, it cannot easily decrypt the encrypted descramble key.

In another embodiment of the present invention, the variable used to encrypt the descramble key may contain identification information of the broadcast receiving apparatus 230, such as the communication number of the broadcast receiving apparatus 230 (specifically, the data transmitter/receiver of the broadcast receiving apparatus). The broadcast receiving apparatus 230 can transmit its identification information when requesting the descramble key.

The broadcast receiving apparatus 230 can encrypt and transmit various kinds of information (e.g., identification information and multimedia metadata) when requesting the descramble key.

In an embodiment of the present invention, the encryption can be performed by a session key generated by a predetermined authentication process between the communication server 220 and the broadcast receiving apparatus 230. Accordingly, the communication server 220 and the broadcast receiving apparatus 230 can perform an authentication process upon initial connection. Public-key cryptography, such as a Diffie-Hellman, RSA, ElGamal or Elliptic Curve, or Symmetric-key cryptography, such as the DES or AES method, may be used for the encryption, and a conventional technique may be used for the authentication.

In another embodiment of the present invention, the descramble key can be directly provided to the broadcast receiving apparatus 230 by the broadcasting station server 210. At this time, the communication server 220 can perform the wired or wireless communication function between the broadcasting station server 210 and the broadcast receiving apparatus 230. The broadcasting station server 210 can verify the user who purchases the multimedia data through the communication number of the broadcast receiving apparatus 230 that requests the descramble key, and it can add the fee for the multimedia data when imposing the audience fee for the reception of a broadcast program.

Even here, the broadcasting station server 210 can encrypt and transmit the descramble key, and the broadcast receiving apparatus 230 can also encrypt and transmit various types of information together when requesting the descramble key. Also, the authentication process between the broadcasting station server 210 and the broadcast receiving apparatus 230 may be performed so as to improve the security of the communication (such as incorporating the cryptography and the authentication described above).

The broadcast receiving apparatus 230 can descramble the multimedia data selected by the user using the received descramble key. The user may use the descrambled multimedia data through the broadcast receiving apparatus 230, and he/she may transmit it to another application terminal.

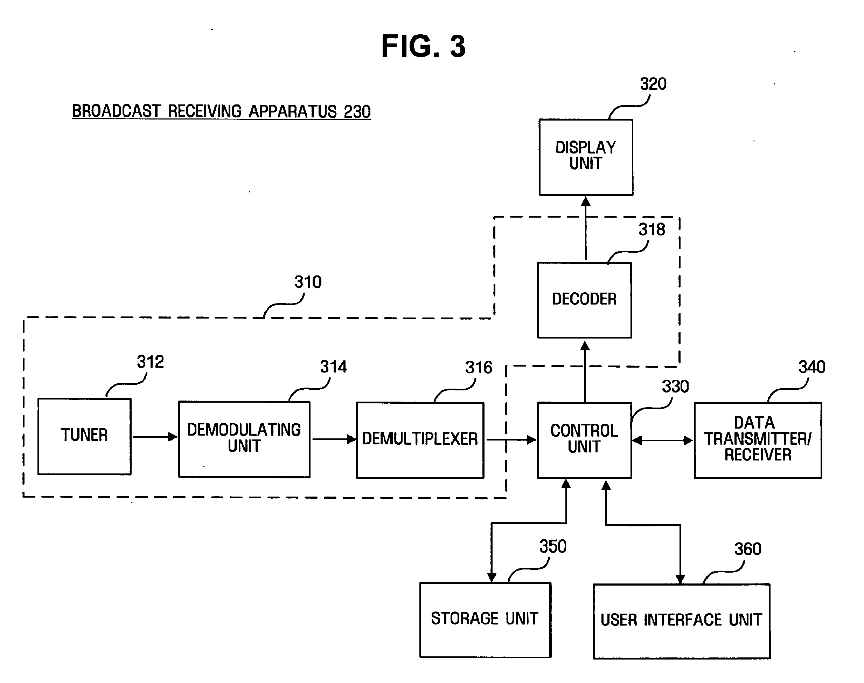

Fig. 3 illustrates a block diagram of the broadcast receiving apparatus 230 according to an embodiment of the present invention.

The broadcast receiving apparatus 230 includes a broadcast signal processing unit 310 to receive and processing a signal transmitted from the broadcasting station server 210, a storage unit 350 to store the multimedia data and the metadata of the broadcast signal, a data transmitter/receiver 340 to request and receive the descramble key, and a control unit 330 to descramble the multimedia data using the descramble key received from the data transmitter/receiver 340.

In addition, the broadcast receiving apparatus 230 may further include a display unit 320 to display the broadcast program processed by the broadcast signal processing unit 310, and a user interface unit 360 to receive control information from the user.

The broadcast signal processing unit 310 includes a tuner 312 to tune to a channel to receive the broadcast signal transmitted from the broadcasting station server 210, a demodulating unit 314 to extract an original broadcast signal from the received broadcast signal carried in a carrier wave, a demultiplexer 316 to classify the demodulated broadcast signal into a video signal, an audio signal, digital broadcasting information, for example, EPG (Electronic Program Guide) information, and scrambled multimedia data and metadata, and a decoder 318 to decode the video signal, the audio signal, and the digital broadcasting information.

If the broadcast signal transmitted from the broadcasting station server 210 is received and processed by the tuner 312 and the demodulating unit 314, the demultipexing unit 316 classifies the processed broadcast signal into a video signal, an audio signal, digital broadcasting information, and scrambled multimedia data and metadata. The video signal, the audio signal, and the digital broadcasting information are used for broadcasting a general broadcast program. The decoder 318 may include, for example, an MPEG decoder that decodes the video signal, the audio signal, and the digital broadcasting information.

The control unit 330 stores the multimedia data and the metadata classified by the demultiplexer 316 in the storage unit 350. At this time, the control unit 330 checks the metadata so that the multimedia data is not stored again.

In the broadcast receiving apparatus 230 according to another embodiment of the present invention, various types of scrambled multimedia data and metadata may be stored in the storage unit 350 upon the manufacture thereof. Accordingly, the control unit 330 may store in the storage unit 350 only new multimedia data and metadata delivered from the demultiplexer 316.

The multimedia data and metadata may be received through a separate broadcasting channel in the time zone that the broadcast program is transmitted, or it may be received by an existing broadcasting channel in a time zone that the broadcast program is not transmitted.

The user can request the retrieval of the multimedia data stored in the storage unit 350 through the user interface unit 360, and the control unit 330 can display the metadata through the display unit 320 according to the request from the user. The displayed metadata may include the type, content, and price of the multimedia data (as described above). The user can check the displayed metadata to determine whether to purchase the multimedia data.

The data transmitter/receiver 340 can communicate in a wired or wireless manner using technologies such as Wi-Fi, GPRS (General Packet Radio Service), DSL (Digital Subscriber Line), or a telephone modem. Accordingly, the data transmitter/receiver 340 can function as the communication modem that can both packetize data for transmission and receive packetized data. The broadcast receiving apparatus 230 may have a unique communication number allocated from a common carrier that operates the communication server 220, such as mobile phone number or a regular phone number.

The data transmitter/receiver 340 transmits a descramble key request message to request the descramble key which can descramble the multimedia data that the user wants to purchase. The descramble key request message may include multimedia data ID (for example, a serial number) that can identify the multimedia data selected by the user.

The data transmitter/receiver 340 outputs the descramble key to the control unit 330 after receiving it. The received descramble key may be directly received from the communication server 220. The communication server 220 may previously receive the descramble key which can descramble the scrambled multimedia data from the multimedia data provider or the broadcasting station server 210. At this time, the communication server 220 can also receive the multimedia data ID of the multimedia data which can be descrambled with the descramble key.

The communication server 220 can retrieve the descramble key requested by the broadcast receiving apparatus 230 using the multimedia data ID. The retrieved descramble key is then transmitted to the broadcast receiving apparatus 230.

In another embodiment of the present invention, the communication server 220 can encrypt and transmit the descramble key requested by the broadcast receiving apparatus 230. The variable used for encrypting the descramble key can contain the multimedia data ID included in the descramble key request message. Accordingly, the control unit 330 of the broadcast receiving apparatus 230 needs the multimedia data ID, transmitted to the communication server 220 when the data transmitter/receiver 340 requests the descramble key, when decrypting the encrypted descramble key. Even if another broadcast receiving apparatus receives the encrypted descramble key, it cannot easily decrypt the key.

In another embodiment of the present invention, the variable used to encrypt the descramble key may contain information that can identify the broadcast receiving apparatus 230, such as a communication number of the broadcast receiving apparatus 230 (specifically, the data transmitter/receiver 340 of the broadcast receiving apparatus 230). The broadcast receiving apparatus 230 may transmit its identification information with the descramble key request.

The data transmitter/receiver 340 of the broadcast receiving apparatus 230 can also encrypt and transmit various types of information (e.g., identification information of the broadcast receiving apparatus 236 and multimedia data ID) together when requesting the descramble key.

Accordingly, the broadcast receiving apparatus 230 may further include a cryptographic unit (not shown) that can encrypt and decrypt data.

The cryptography can be performed by a session key generated by a predetermined authentication process between the communication server 220 and the broadcast receiving apparatus 230. Accordingly, the communication server 220 and the broadcast receiving apparatus 230 can perform the authentication process upon an initial connection. Public-key cryptography, such as Diffie-Hellman, RSA, ElGamal or Elliptic Curve, or Symmetric-key Cryptography, such as DES or AES, may be used for the encryption, and a conventional authentication technique may be used.

The communication server 220 may add the multimedia data fee when charging the user of the broadcast receiving apparatus 230 the communication fee. Also, the communication server 220 may notify the broadcasting station server 210 of the multimedia data purchase so that the broadcast operator can calculate the multimedia data fee.

In another embodiment of the present invention, the descramble key can be directly received from the broadcasting station server 210, and the communication server 220 can perform a communication relaying function to transmit the descramble key between the broadcasting station server 210 and the data transmitter/receiver 340 of the broadcast receiving apparatus 230. The broadcasting station server 210 can verify the user who purchases the multimedia data through the communication number of the data transmitter/receiver 340, and can add the multimedia data fee associated with the multimedia data purchased by the user when imposing the audience fee for the reception of a broadcast program.

Even in this case, the broadcasting station server 210 can encrypt and transmit the descramble key, and the broadcast receiving apparatus 230 also can encrypt and transmit the various types of the information together when requesting the descramble key. Also, the authentication process may be performed between the broadcasting station server 210 and the broadcast receiving apparatus 230.

If the descramble key has been received, the control unit 330 descrambles the multimedia data purchased by the user using this key. The descrambled multimedia data can be directly used by the broadcast receiving apparatus 230. At this time, the decoder 318 can be used for executing the multimedia data. However, the present invention is not limited to this embodiment, and the broadcast receiving apparatus 230 may include a separate application unit (not shown) to execute the descrambled multimedia data.

Also, the user can transmit the descrambled multimedia data to another application terminal that is capable of using the multimedia data.

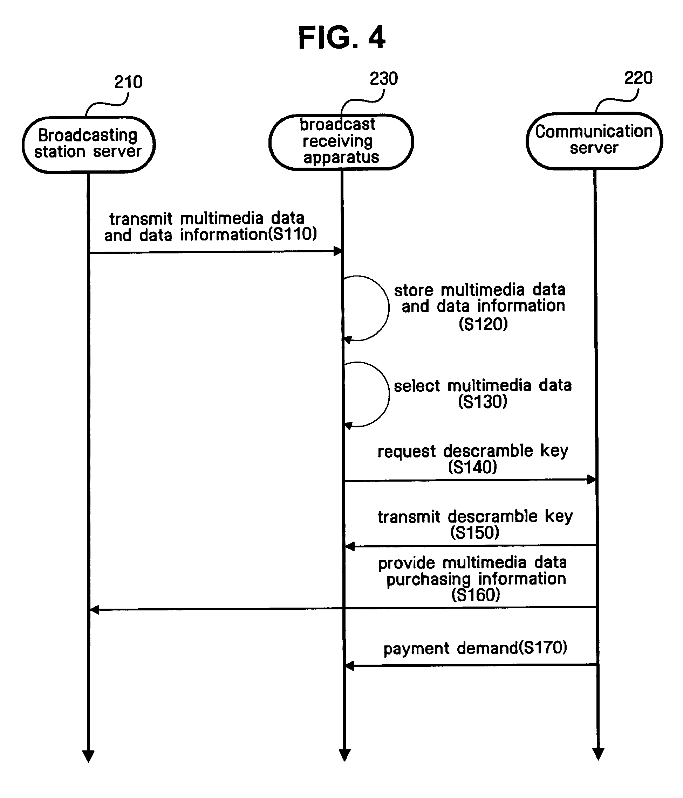

Fig. 4 is a flowchart illustrating a multimedia data transacting procedure according to an embodiment of the present invention.

First, the broadcasting station server 210 modulates various multimedia data and the metadata in a format suitable for one or more transmitting media (e.g., over-the-air, satellite and/or cable broadcast), and transmits it in operation S110.

The multimedia data transmitted from the broadcasting station server 210 can be periodically or non-periodically updated. For example, if new music becomes available, the broadcasting station server 210 groups the files, for example, MP3 files, and transmits them for each predetermined period, or transmits them when the number of grouped MP3 files is greater than a predetermined number. Accordingly, the user can receive new multimedia data such as movies, music videos, or music from the broadcasting station server 210.

The broadcasting station server 210 may obtain the multimedia data and metadata from a separate multimedia data seller (not shown).

The broadcast receiving apparatus 230 can receive the broadcast signal transmitted from the broadcasting station server 210, and may include, for example, a set-top box or a digital television. The broadcast receiving apparatus 230 extracts the multimedia data and the metadata from the broadcast signal and stores the data in operation S120.

The user can check the metadata stored in the broadcast receiving apparatus 230 to select multimedia data to purchase in operation S130.

If the user selects multimedia data to purchase, the broadcast receiving apparatus 230 requests a descramble key to descramble the multimedia data in operation S140. The request and reception of the descramble key can be performed through a communication connection such as a regular telephone and a mobile phone. Therefore, the broadcast receiving apparatus 230 may include a data transmitter/receiver 340 that can communicate in a wired or wireless manner using technologies such as Wi-Fi, GPRS (General Packet Radio Service), DSL (Digital Subscriber Line), or a telephone modem. The data transmitter/receiver included in the broadcast receiving apparatus 230 may have a unique communication number, such as a mobile number or a telephone number allocated from a common carrier, that operates the communication server 220.

If the broadcast receiving apparatus 230 requests the descramble key, the communication server 220, which provides a wired or wireless communication service, transmits the requested descramble key to the broadcast receiving apparatus 230 in operation S150. The communication server 220 may previously obtain the descramble key from the multimedia data provider or the broadcasting station server 210.

In another embodiment of the present invention, the communication server 220 can encrypt and transmit the requested descramble key. The variable used to encrypt the descramble key may contain the multimedia data ID included in the descramble key request message transmitted from the broadcast receiving apparatus 230. Accordingly, the multimedia data ID of the requested multimedia data must be known when decrypting the encrypted descramble key. As such, even if another broadcast receiving apparatus receives the encrypted descramble key, it cannot easily decrypt the key.

In another embodiment of the present invention, the variable used to encrypt the descramble key may contain identification information of the broadcast receiving apparatus 230, such as the communication number of the broadcast receiving apparatus 230 (specifically, the data transmitter/receiver 340 of the broadcast receiving apparatus). The broadcast receiving apparatus 230 can transmit its identification information with the descramble key request.

The broadcast receiving apparatus 230 can encrypt and transmit various kinds of information (e.g., the identification information of the broadcast receiving apparatus 230 and the multimedia metadata) with the descramble key request.

The cryptography can be performed by a session key generated by a predetermined authentication process between the communication server 220 and the broadcast receiving apparatus 230. Accordingly, the communication server 220 and the broadcast receiving apparatus 230 can perform the authentication process upon initial connection. Public-key cryptography, such as Diffie-Hellman, RSA, ElGamal or Elliptic Curve, or Symmetric-key Cryptography, such as the DES method or AES, may be used for the encryption, and a conventional authentication technique may be used.

The communication server 220 notifies the broadcasting station server 210 of the multimedia data purchase in operation S160, so that the broadcast operator can calculate the multimedia data fee.

The communication server 220, which transmits the descramble key, may add the multimedia data fee when charging the communication fee to the user of the broadcast receiving apparatus 230 (S170).

In another embodiment of the present invention, the descramble key can be directly provided to the broadcast receiving apparatus 230 by the broadcasting station server 210. At this time, the communication server 220 can perform a communication relaying function to transmit the descramble key between the broadcast receiving apparatus 230 and the broadcasting station server 210. The broadcasting station server 210 can verify the user who purchases the multimedia data by checking the communication number of the broadcast receiving apparatus 230 which requests the descramble key, and it can add the multimedia data fee when charging the audience fee for the reception of a broadcast program.

Even in this case, the broadcasting station server 210 can encrypt and transmit the descramble key, and the authentication process between the broadcasting station server 210 and the broadcast receiving apparatus 230 may be performed.

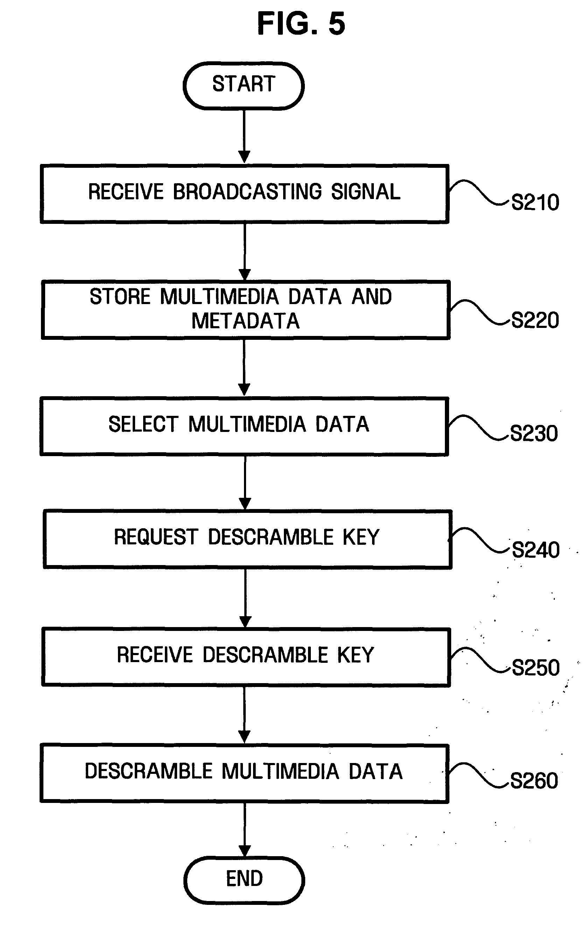

The broadcast receiving apparatus 230 can descramble the multimedia data selected by the user using the received descramble key. The multimedia data purchasing procedure of the broadcast receiving apparatus 230 will now be described with reference to Fig. 5.

Fig. 5 is a flowchart illustrating a multimedia data purchasing procedure of the broadcast receiving apparatus according to an embodiment of the present invention.

When the broadcast signal transmitted from the broadcasting station server 210 is received in operation S210, it is received and processed by the tuner 312 and the demodulating unit 314, respectively. The demultiplexer 316 classifies the broadcast signal into a video signal, an audio signal, digital broadcasting information, and scrambled multimedia data and metadata.

The control unit 330 stores the multimedia data and the metadata classified by the demultiplexer 316 in the storage unit 350 (S220).

In the broadcast receiving apparatus 230 according to another embodiment of the present invention, various types of scrambled multimedia data may be stored in the storage unit 350 upon the manufacture thereof. Accordingly, the control unit 330 may select and store only multimedia data that is not already stored in the storage unit 350. This operation can be performed by looking at the metadata (e.g., the serial number) of the multimedia data.

The multimedia data and metadata may be received through a separate broadcasting channel in the time zone that the broadcast program is transmitted, or it may be received through an existing broadcasting channel in a time zone that the broadcast program is not transmitted.

The user may request the retrieval of the multimedia data stored in the storage unit 350 through the user interface unit 360, and the control unit 330 can display the metadata stored in the storage unit 350 through the display unit 320 according to the request of the user. The user can check the displayed metadata and select multimedia data to purchase in operation S230.

The data transmitter/receiver 340 can communicate in a wired or wireless manner using technologies such as Wi-Fi, GPRS, DSL or the telephone modem, and it can transmit a descramble key request message to obtain the descramble key which can descramble the multimedia data selected by the user (S240). The data transmitter/receiver 340 may have a unique communication number allocated from the common carrier that operates the communication server 220.

The descramble key request message may contain the multimedia data ID which can identify the multimedia data selected by the user.

The data transmitter/receiver 340 receives the requested descramble key in operation S250. The descramble key may be directly received from the communication server 220. Previous to the descramble key request, the communication server 220 can receive the descramble key from the multimedia data provider or the broadcasting station server 210.

In another embodiment of the present invention, the communication server 220 can encrypt and transmit the requested descramble key. The variable used to encrypt the descramble key can contain the multimedia data ID included in the descramble key request message. Accordingly, the multimedia data ID must be known in order to decrypt the encrypted descramble key. As such, even if another broadcast receiving apparatus receives the encrypted descramble key, it cannot easily decrypt the key.

In another embodiment of the present invention, the variable used to encrypt the descramble key may contain identification information of the broadcast receiving apparatus 230, such as the communication number of the broadcast receiving apparatus 230 (specifically, the data transmitter/receiver 340 of the broadcast receiving apparatus). The broadcast receiving apparatus 230 can transmit its identification information with the descramble key request.

The broadcast receiving apparatus 230 can encrypt and transmit various types of information (e.g., identification information of the broadcast receiving apparatus 230 and the multimedia metadata) with the descramble key request.

The cryptography can be performed by a session key generated by a predetermined authentication process between the communication server 220 and the broadcast receiving apparatus 230. Accordingly, the communication server 220 and the broadcast receiving apparatus 230 can perform the authentication process upon the initial connection. Public-key cryptography, such as Diffie-Hellman, RSA, ElGamal or Elliptic Curve, or Symmetric-key Cryptography, such as the DES or AES method, may be used for the encryption, and a conventional authentication technique may be used.

The communication server 220 may add the multimedia data fee when charging the communication fee to the user of the broadcast receiving apparatus 230. Also, the communication server 220 may notify the broadcasting station server 210 of the multimedia data purchase so that the broadcast operator can calculate the multimedia data fee.

In another embodiment of the present invention, the descramble key can be directly received from the broadcasting station server 210, and the communication server 220 can perform communication relaying between the broadcasting station server 210 and the data transmitter/receiver 340 of the broadcast receiving apparatus 230. The broadcasting station server 210 can verify the user who purchases the multimedia data through the communication number of the data transmitter/receiver 340 which requests the descramble key, and it can add the multimedia data fee to the audience fee for the reception of a broadcast program.

Even in this case, the broadcasting station server 210 can encrypt and transmit the descramble key, and the broadcast receiving apparatus 230 also can encrypt and transmit the various types of the information together when requesting the descramble key. Also, the authentication process between the broadcasting station server 210 and the broadcast receiving apparatus 230 may be performed.

If the descramble key has been received, the control unit 330 descrambles the multimedia data purchased by the user using the descramble key (S260). The descrambled multimedia data can be directly used by the user of the broadcast receiving apparatus 230. At this time, the decoder 318 can be used for decoding the multimedia data. However, the present invention is not limited to this embodiment, and the broadcast receiving apparatus may include a separate application unit (not shown) to decode the descrambled multimedia data.

Also, the user can transmit the descrambled multimedia data to another application terminal that is capable of using the multimedia data.

As mentioned above, according to the multimedia data transacting system and method of embodiments of the present invention, some aspects of the system and method are that the multimedia data purchasing procedure can be simplified and shortened, and the network communication fee imposed when connecting to the network to purchase the multimedia can be reduced.

Although a few embodiments of the present invention have been shown and described, it would be appreciated by those skilled in the art that changes may be made in these embodiments without departing from the principles and spirit of the invention, the scope of which is defined in the claims and their equivalents. The exemplary embodiments should be considered in descriptive sense only, and not for purposes of limitation. Therefore, the scope of the invention is defined not by the detailed description of the invention but by the claims and their equivalents, and all differences within the scope will be construed as being included in the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiving apparatus (230), comprising:
a broadcast signal processing unit (310) operable to receive a broadcast signal transmitted from a broadcasting station server (210), and extract scrambled multimedia data and metadata contained in the received broadcast signal;
a storage unit (350) operable to store the extracted multimedia data and metadata;
a data transmitter/receiver (340) operable to transmit a message requesting a descramble key to descramble multimedia data a user wants to purchase, and to receive the descramble key; and
a control unit (330) operable to descramble the multimedia data the user wants to purchase using the received descramble key.

2. The apparatus according to claim 1, wherein the data transmitter/receiver (340) is a communication modem operable to perform a wired or wireless communication service.

3. The apparatus according to claim 2, wherein the descramble key is received from a communication server (220) operable to provide the wired or wireless communication service.

4. The apparatus according to any preceding claim, wherein a fee associated with the multimedia data purchased by the user is imposed, together with a communication fee associated with the wired or wireless communication service, by a common carrier that operates the communication server.

5. The apparatus according to any preceding claim, wherein the descramble key is received from the broadcasting station server (210).

6. The apparatus according to claim 5, wherein a fee associated with the multimedia data purchased by the user is imposed together with an audience fee associated with a reception of a broadcast program provided by the broadcasting station server (210).

7. The apparatus according to any preceding claim, further comprising an application unit to execute the descrambled multimedia data.

8. The apparatus according to any preceding claim, wherein a predetermined amount of the scrambled multimedia data and metadata is arranged to be stored in the storage unit (350) upon the manufacture thereof.

9. The apparatus according to claim 8, wherein the control unit (330) is operable to select and stores the multimedia data and metadata which is not previously stored in the storage unit (350) from the received multimedia data and metadata.

10. The apparatus according to any preceding claim, wherein the broadcasting station server (210) is operable to transmit the scrambled multimedia data and metadata through a separate channel other than a general broadcast program transmitting channel.

11. The apparatus according to any preceding claim, wherein the broadcasting station server (210) is operable to transmit the scrambled multimedia data and metadata in a time zone in which a general broadcast program is not being transmitted.

12. The apparatus according to any preceding claim, wherein the descramble key is arranged to be encrypted before transmission.

13. The apparatus according to claim 12, wherein a variable used in the encryption contains at least one of first identification information to identify the multimedia data which can be descrambled by the descramble key, second identification information to identify the data transmitter/receiver, or a combination thereof.

14. The apparatus according to claim 13, wherein the first and/or second identification information is arranged to be transmitted with the descramble key request.

15. A multimedia data transacting method, the method comprising:
receiving (S210) a broadcast signal transmitted from a broadcasting station server (210) and extracting scrambled multimedia data and metadata from the broadcast signal;
requesting (S240) a descramble key to descramble the extracted multimedia data that a user wants to purchase;
receiving (S250) the descramble key as in response to the request; and
descrambling (S260) the multimedia data the user wants to purchase using the received descramble key.

16. The method according to claim 15, wherein a fee associated with the multimedia data purchased by the user is imposed according to the transmission of the descramble key.

17. The method according to claim 15 or 16, wherein the request and the reception of the descramble key is performed by a communication modem which performs a wired or wireless communication service.

18. The method according to claim 17, wherein the descramble key is received from a communication server which provides the wired or wireless communication service.

19. The method according to claim 18, wherein a fee associated with the multimedia data purchased by the user is imposed, according to the transmission of the descramble key and together with a communication fee associated with the wired or wireless communication service, by a common carrier that operates the communication server.

20. The method according to any of claims 15-19, wherein the descramble key is received from the broadcasting station server.

21. The method according to claim 20, wherein a fee associated with the multimedia data purchased by the user is imposed according to the transmission of the descramble key and together with an audience fee associated with the reception of a broadcast program provided by the broadcasting station server.

22. The method according to any of claims 15-21, wherein the broadcasting station server transmits (S110) the scrambled multimedia data and metadata through a separate channel other than a general broadcast program transmitting channel.

23. The method according to any of claims 15-22, wherein the broadcasting station server transmits the scrambled multimedia data and metadata in a time zone in which a general broadcast program is not being transmitted.

24. The method according to any of claims 15-23, wherein the descramble key is encrypted before transmission.

25. The method according to any of claims 15-24, wherein a variable used in the encryption contains at least one of first identification information to identify the multimedia data which can be descrambled by the descramble key, second identification information to identify a communication service which performs a wired or wireless communication service used for the request and the reception of the descramble key, or a combination thereof.

26. The method according to claim 25, wherein the first and/or second identification information is transmitted with the descramble key request.

27. A broadcast receiving apparatus (230), comprising:
a broadcast signal processing unit (310) operable to receive a broadcast signal transmitted from a broadcasting station server (210), and to extract scrambled multimedia data contained in the received broadcast signal; and
a data transmitter/receiver (340) operable to request and receive a descramble key to descramble multimedia data that a user selects to purchase.

28. A multimedia data transacting method, the method comprising:
extracting scrambled multimedia data from a broadcast signal received from a broadcasting station server;
requesting (S240) and receiving (S250) a descramble key to descramble multimedia data, contained in the broadcast signal, that a user selects to purchase; and
descrambling (S260) the selected multimedia data using the descramble key.
